# EUROPÄISCHE PATENTSCHRIFT

(11) **EP 0 318 822 B1**
(45) Veröffentlichungstag und Bekanntmachung des Hinweises auf die Patenterteilung: **20.04.1994**
(21) Anmeldenummer: 88119525.9
(22) Anmeldetag: 24.11.1988
(51) Int. Cl.: C08F 6/28, C08F 6/00

(54) **Verfahren zur Reinigung von Verunreinigungen enthaltendem N-Vinylcarbazolpolymeren**
Process for purifying N-vinyl carbazole polymers containing impurities
Procédé pour purifier des polymères de carbazoles de N-vinyle contenant des contaminants

(30) Priorität: 02.12.1987 DE 3740786
(43) Veröffentlichungstag der Anmeldung: 07.06.1989
(73) Patentinhaber: BASF Aktiengesellschaft, 67063 Ludwigshafen (DE)
(72) Erfinder: Aldag, Reinhard, Dr., D-6930 Eberbach (DE); Neumann, Peter, Dr., D-6800 Mannheim 31 (DE)

(56) Entgegenhaltungen:
- DE-A- 1 918 594
- CHEMICAL ABSTRACTS, Band 103, Nr. 24, 1985, Seite 16, Zusammenfassung Nr.196625v, Columbus, Ohio, US; V. KRUKONIS: "Processing of polymers withsupercritical fluids", & POLYM. NEWS 1985,11(1), 7-16

## Beschreibung

Die Erfindung betrifft ein Verfahren zur Reinigung von Verunreinigungen enthaltendem Poly-N-vinylcarbazol.

Poly-N-vinylcarbazol, PVCa, ist ein Polymermaterial, das aufgrund seiner photoleitenden Eigenschaften für elektrophotographische Anwendungen von großer Bedeutung ist.

Allen technischen Verfahren zur Herstellung von PVCa ist gemein, daß ein mehr oder weniger verunreinigtes Polymermaterial anfällt, das neben Anthracen und anderen niedermolekularen Anteilen vor allem das Monomer mit Gehalten von 1 bis 6 % enthält. Wie im Polymer Journal Bd. 20, 1979, Seite 867 bis 870 ausführlich dargelegt, hat der Reinheitsgrad einen entscheidenden Einfluß auf diverse elektrophotographische Charakteristika, wie Photoleitfähigkeit, Photoempfindlichkeit, Kontrastpotential und ähnlichem. So wird beispielsweise für das Monomere Vinylcarbazol ein Gehalt von unter 100 ppm gefordert.

In der Literatur werden bereits Methoden zur Reinigung von PVCa genannt, die im wesentlichen aus einem Umfällungsprozeß bestehen. Dabei wird das Polymermaterial in einem geeigneten Lösungsmittel, wie z.B. Dimethylformamid, Tetrahydrofuran, Benzol, Toluol oder Methylenchlorid, gelöst und durch Zugabe von Alkohol, vorzugsweise Methanol, wieder ausgefällt.

In Polymer Journal vgl. loc. cit. wird festgestellt, daß ausgehend von kommerziell erhältlicher Rohware ca. 5 bis 10, besser 12, Reinigungscyclen erforderlich sind, um ein geeignetes Material zu erhalten, vgl. insbesondere die Figuren 1 bis 3 auf Seite 868. Die dabei zu handhabenden Lösungsmittelmengen sind aus wirtschaftlicher und toxikologischer Sicht nicht akzeptabel. Zudem gestaltet sich der Ausfällungsprozeß in größeren Kesseleinheiten problematisch, da das Material leicht koaguliert.

In Pol. News (1985), 11(1), 7-16, wird die Reinigung von Poly-N-vinylcarbazol mit überkritischen Flüssigkeiten, z.B. CO₂ oder Ethylen, beschrieben. Dieses Verfahren ist technisch sehr aufwendig und es werden Reinheiten im Bereich von 0.1% Restmonomergehalt erzielt
Aufgabe der vorliegenden Erfindung war es, ein Verfahren zur Reinigung von technischem PVCa zu entwickeln, das den elektrophotographischen Reinheitsansprüchen genügt und die Nachteile der Fällungsverfahren nicht aufweist.

Es wurde nun gefunden, daß die vorstehend genannten Nachteile vermieden werden können, wenn man das zu reinigende Poly-N-vinylcarbazol in einer geeigneten Vorrichtung bei Temperaturen von 20 bis 150°C mit einem Extraktionsmittel behandelt.

Die Erfindung betrifft daher ein Verfahren zur Reinigung von Verunreinigungen enthaltenden N-vinylcarbazol-Polymeren. Dieses Verfahren ist dadurch gekennzeichnet, daß das zu reinigende Poly-N-vinylcarbazol-Polymere in einer geeigneten Vorrichtung bei Temperaturen von 20 bis 150°C mit einem Extraktionsmittel aus der Gruppe der Ketone mit 3 bis 10 C-Atomen, der Ester aliphatischer Carbonsäuren mit 1-6 C-Atomen im Carbonsäureteil und Gemischen hiervon behandelt wird.

Nachstehend werden das erfindungsgemäße Verfahren und die zu seiner Durchführung erforderlichen Ausgangsstoffe beschrieben.

Poly-N-vinylcarbazol ist ein lange bekanntes Polymer und weist, unabhängig von seinem Herstellverfahren, Verunreinigungen an Vinylcarbazol (ca. 1 bis 6 Gew.%, insbesondere 3 bis 4 Gew.%), Carbazol, Anthracen (bis 500 ppm) und gegebenenfalls Schwefelverbindungen im ppm-Bereich auf. Die genannten Verbindungen oder Teile davon, insbesondere Vinylcarbazol, werden als Verunreinigungen im Sinne des erfindungsgemäßen Verfahrens betrachtet.

Unter Poly-N-vinylcarbazol im Sinne des erfindungsgemäßen Verfahrens sind sowohl Homopolymerisate des N-Vinylcarbazols als auch Copolymerisate desselben zu verstehen, wobei die Copolymerisate bis zu 30 Gew.% an mit N-Vinylcarbazol copolymeriserbaren Monomeren enthalten können. Ferner können alkylsubstituierte Poly-N-vinylcarbazole, mit 1 bis 6 C-Atomen im Alkylrest, angewendet werden. Außerdem kommen kernhalogenierte, insbesondere chlorierte, Poly-N-vinylcarbazole für den Einsatz in dem erfindungsgemäßen Verfahren in Betracht. Schließlich können auch Mischungen der vorgenannten Stoffgruppen verwendet werden. Aus der Reihe der vorstehend genannten Poly-N-vinylcarbazole wird insbesondere das Homopolymerisat des N-Vinylcarbazols angewendet. Methoden zur Herstellung von Poly-N-vinylcarbazolen sowie Angaben über die Löslichkeit sowie thermische, mechanische und elektrische Eigenschaften dieser Stoffe sind in einem Artikel von W. Klöpffer in Kunststoffe, 61 (1971), Heft 8, Seiten 533 bis 539 zusammengestellt.

Zur Herstellung von Poly-N-Vinylcarbazol sind verschiedene Polymerisationsverfahren bekannt:
In der DE-PS 931 731 ist z.B. eine radikalisch initiierte Blockpolymerisation unter Inertgasüberdruck beschrieben. Auch eine radikalische Polymerisation in Suspension ist möglich, vgl. J. Appl. Chem. 9 (1959) 553 oder DE-AS 1 918 594.

Gleichfalls gelingt auch die kationische Polymerisation z.B. gemäß DE-OS 2 111 294 durch Säurekatalyse in inertem Lösungsmittel.

Eine weitere Methode ist in der US-PS 2 072 465 beschrieben. Darüber hinaus ist Poly-N-vinylcarbazol im Handel erhältlich (Luvican® der BASF Aktiengesellschaft). Die aus technischen Verfahren stammenden Poly-N-vinylcarbazole weisen üblicherweise Viskositätszahlen, Vz, von 124 bis 253 ml/g, (gemessen 0,5 %ig in Tetrahydrofuran bei 23°C) auf. Dies entspricht zahlenmittleren Molgewichten im Bereich von 284 000 bis 346 000 bei Gewichtsmitteln von 1,0 Millionen bis 2,4 Millionen.

Zur Durchführung des erfindungsgemäßen Verfahrens wird eine Fest-Flüssig-Extraktion angewendet. Das Prinzip und die hierfür in Frage kommenden Vorrichtungen sind an sich bekannt und beispielsweise in Ullmanns Enzyklopädie der technischen Chemie, 4. Auflage 1972, Band 2, Seiten 722 bis 729 im Kapitel "Extraktion von Feststoffen" für das kontinuierliche und das diskontinuierliche Verfahren beschrieben. Das erfindungsgemäße Verfahren wird vorzugsweise kontinuierlich durchgeführt, wobei zur Reinigung vorzugsweise eine Vorrichtung verwendet wird, die auf dem Soxhlet-Prinzip basiert.

Dabei wird in einer Vorlage das Extraktionsmittel zum Sieden erhitzt. Der aufsteigende Dampf gelangt zu einem Kühler, wird dort kondensiert und fließt dann, gegebenenfalls unter Durchlaufen einer Temperiereinheit, in den mit dem Extraktionsgut beladenen Reaktor. Nach einer bestimmten Verweilzeit, die durch die Abmessungen des Reaktors bestimmt sind, läuft das beladene Extraktionsmittel in die Vorlage zurück.

Als Extraktionsmittel für das Poly-N-vinylcarbazol kommen erfindungsgemäß Ketone mit 3 bis 10 C-Atomen, wie Aceton oder Methylethylketon, oder die Ester aliphatischer Carbonsäuren mit 1 bis 6 C-Atomen im Carbonsäureteil, wie Essigsäureethylester oder Essigsäurebutylester, d.h. nicht lösende und nicht in größerem Umfang quellende organische Flüssigkeiten in Frage. Bevorzugt werden dabei die Ester, insbesondere Essigsäureethylester. Auch Gemische der genannten Lösungsmittel untereinander kommen in Betracht oder Gemische der genannten Ketone und/oder Ester mit einer untergeordneten Menge, insbesondere bis zu 30 Gew.%, bezogen auf das Extraktionsmittelgemisch, einer anderen organischen Flüssigket.

Die Temperatur, bei der die Extraktion vollzogen wird, richtet sich nach dem verwendeten Extraktionsmittel. Sie liegt insbesondere zwischen 20°C und 100°C, vorzugsweise zwischen 40°C und 80°C.

Die Extraktionsdauer richtet sich nach dem gewünschten Reinheitsgrad. Sie ist abhängig von der Korngrößenverteilung des Extraktionsgutes, der Extraktionstemperatur und vom Extraktionsmittel und liegt bei diskontinuierlicher Arbeitsweise zwischen 10 Minuten und 100 h. Bei Verwendung einer Soxhlet-Apparatur beträgt sie im allgemeinen 2 bis 80 Stunden.

Gegenüber den herkömmlichen Fällungstechniken weist das erfindungsgemäße Verfahren folgende Vorteile auf:
- Man benötigt nur 1/5 bis 1/10 der Lösungsmittelmenge.
- Der Zeitaufwand ist deutlich geringer.
- Es fällt nur ein Lösungsmittel oder Lösungmsittelgemisch an, das mit den Verunreinigungen kontaminiert ist und das destillativ wiedergewonnen oder nach Einstellung der gewünschten Zusammensetzung wieder eingesetzt werden kann. Im Gegensatz zu den Lösungsmittelgemischen vom Stand der Technik erfolgt kein Abtrennen eines Fällungsmittels.

Das nach dem erfindungsgemäßen Verfahren gereinigte Poly-N-vinylcarbazol ist in überraschend vorteilhafter Weise geeignet für Anwendungen im Zusammenhang mit seiner Photoleitfähigkeit. Nach Zusatz von üblichen Sensibilisatoren eignet es sich hervorragend zur Herstellung photoleitfähiger Filme oder Folien auf leitenden Unterlagen oder für die elektrophotographische Bilderzeugung und bringt hier im Vergleich zu den bekannten Materialien verbesserte Eigenschaften.

Die in den Beispielen und dem Vergleichsversuch genannten Verunreinigungen wurden mit üblichen gaschromatographischen Methoden bestimmt.

Zur Durchführung der Beispiele und des Vergleichsversuchs wurde ein technisches Poly-N-vinylcarbazol der BASF Aktiengesellschaft (Luvican® M 170) verwendet, das als Verunreinigung 4,2 Gew.% Vinylcarbazol, 0,1 Gew.% Carbazol und Anthracen im ppm-Bereich aufwies. Es besaß eine Korngrößenverteilung im Bereich von 4 bis 0,1 mm.

Die Erfindung wird durch die nachfolgenden Beispiele und den Vergleichsversuch näher erläutert.

### Beispiel 1

10 g technisches PVCa wurden in einer Standard-Soxhlet-Apparatur mit 300 ml Essigsäureethylester extrahiert. Die Temperatur des Extraktionsmittels bei Kontakt mit dem Extraktionsgut lag bei ca. 70°C.

Das so extrahierte PVCa enthielt nach 8 Stunden nur noch 150 bis 200 ppm Vinylcarbazol, nach 72 h wurden weniger als 50 ppm Vinylcarbazol bestimmt. Der Gehalt an Carbazol war unterhalb der Nachweisgrenze.

### Beispiel 2

Es wurde wie in Beispiel 1 verfahren, jedoch anstelle von Essigsäureethylester die gleiche Menge Methylethylketon verwendet. Die Temperatur lag bei ca. 60°C.

Nach 72 h enthielt das so gereinigte PVCa nur noch 90 ppm Vinylcarbazol.

### Vergleichsversuch

10 g technisches PVCa wurde innerhalb von 2 h unter Erwärmen in 200 ml Tetrahydrofuran vollständig gelöst. Nach Abkühlen wurde unter Rühren 100 ml Methanol in zwei Portionen langsam zugetropft.

Das ausgefallene Polymere wurde abgesaugt und getrocknet. Danach wurde erneut, wie beschrieben, in Tetrahydrofuran gelöst und gefällt. Dieser Vorgang wurde noch zweimal wiederholt, wozu insgesamt 24 Stunden benötigt werden. Nach der 4. Reinigungsoperation lag der Gehalt an Vinylcarbazol bei 0,015 %.

Nach der 1. Operation hatte der Vinylcarbazolgehalt noch 0,1 Gew.% betragen. Nach der 2. Operation betrug der Vinylcarbazolgehalt noch 0,04 Gew.%.

## Patentansprüche

1. Verfahren zur Reinigung von Verunreinigungen enthaltenden Polymeren ausgewählt aus Homopolymerisaten des N-Vinylcarbazols, Copolymerisaten des N-Vinylcarbazols mit bis zu 30 Gew %. an mit N-Vinylcarbazol copolymerisierbaren Monomeren, alkylsubstituierten Poly-N-vinylcarbazolen mit 1-6 C-Atomen im Alkylrest und Kernhalogenierten Poly-N-vinylcarbazolen oder Mischungen der vorstehend genannten Polymeren dadurch gekennzeichnet, daß das zu reinigende Polymere in einer geeigneten Vorrichtung bei Temperaturen von 20 bis 150°C mit einem Extraktionsmittel aus der Gruppe der Ketone mit 3 bis 10 C-Atomen, der Ester aliphatischer Carbonsäuren mit 1 bis 6 C-Atomen im Carbonsäureteil und Gemischen hiervon behandelt wird.

2. Verfahren nach Anspruch 1, dadurch gekennzeichnet, daß die Extraktion kontinuierlich durchgeführt wird.

3. Verfahren nach Anspruch 1, dadurch gekennzeichnet, daß die Extraktion in einer Vorrichtung nach der Art eines Soxleth-Extraktors durchgeführt wird.

## Claims

1. A process for the purification of polymers containing impurities, the polymers being selected from homopolymers of N-vinylcarbazole, copolymers of N-vinylcarbazole having up to 30% by weight of monomers which are copolymerizable with N-vinylcarbazole, alkyl-substituted poly-N-vinylcarbazoles where alkyl is of 1-6 carbon atoms and poly-N-vinylcarbazoles which are halogenated in the nucleus and mixtures of the above-mentioned polymers, comprising treatment of the polymer to be purified in a suitable apparatus at from 20 to 150°C with an extracting agent selected from the group consisting of the ketones of 3 to 10 carbon atoms, the esters of aliphatic carboxylic acids where the carboxylic acid moiety is of 1 to 6 carbon atoms and mixtures of these.

2. A process as claimed in claim 1, wherein the extraction is carried out continuously.

3. A process as claimed in claim 1, wherein the extraction is carried out in an apparatus based on a Soxleth extractor.

## Revendications

1. Procédé de purification de polymères contenant des impuretés, choisis parmi des homopolymères du N-vinylcarbazole, des copolymères du N-vinylcarbazole avec jusqu'à 30% en poids de monomères copolymérisables avec le N-vinylcarbazole, des poly-N-vinylcarbazoles à substitution alkylique, dont le radical alkyle comporte de 1 à 6 atomes de carbone et des poly-N-vinylcarbazoles halogénés dans le noyau, ou des mélanges des polymères précités, caractérisé en ce que le polymère à purifier est traité à des températures de 20 à 150°C par un agent d'extraction appartenant au groupe des cétones qui comportent de 3 à 10 atomes de carbone, des esters d'acides aliphatiques dont la partie acylcarboxylique comporte de 1 à 6 atomes de carbone et des mélanges de ces composés dans une installation appropriée.

2. Procédé suivant la revendication 1, caractérisé en ce que l'on entreprend l'extraction en continu.

3. Procédé suivant la revendication 1, caractérisé en ce que l'on entreprend l'extraction dans une installation selon la nature d'un extracteur Soxhlet.
